# EUROPEAN PATENT SPECIFICATION

(11) **EP 2 832 820 B1**
(45) Date of publication and mention of the grant of the patent: **03.08.2016**
(21) Application number: 12876469.3
(22) Date of filing: 08.05.2012
(51) Int. Cl.: C09K 11/87, C09K 11/67, C09K 11/02, C09K 11/77

(54) **TITANATE LUMINESCENT MATERIAL AND PREPARATION METHOD THEREFOR**
LUMINESZENTES TITANATMATERIAL UND HERSTELLUNGSVERFAHREN DAFÜR
MATÉRIAU LUMINESCENT TITANATE ET SON PROCÉDÉ DE PRÉPARATION

(43) Date of publication of application: 04.02.2015
(73) Proprietor: Ocean's King Lighting Science&Technology Co., Ltd., Guangdong 518054 (CN); Shenzhen Ocean's King Lighting Engineering Co. Ltd, Shenzhen, Guangdong (CN)
(72) Inventor: ZHOU, Mingjie, Shenzhen Guangdong 518054 (CN); WANG, Rong, Shenzhen Guangdong 518054 (CN); CHEN, Guitang, Shenzhen Guangdong 518054 (CN)
(74) Representative: Manitz, Finsterwald & Partner GbR
(86) International application number: PCT/CN2012/075197
(87) International publication number: WO 2013/166659

(56) References cited:
- WO-A1-2012/012947
- CN-A- 101 775 279
- CN-A- 102 408 892
- US-A1- 2004 227 451
- Xiaoming Liu ET AL: "Monodisperse spherical core-shell structured Si O 2 - Ca Ti O 3 : Pr 3 + phosphors for field emission displays Monodisperse spherical core-shell structured SiO 2 - CaTiO 3 : Pr 3+ phosphors for field emission displays", Journal of Applied Physics Sci. Technol. A, 1 January 2006 (2006-01-01), pages 124902-2472, XP055223887, Retrieved from the Internet: URL:http://scitation.aip.org/docserver/ful ltext/aip/journal/jap/99/12/1.2204751.pdf? expires=1445957371&id=id&accname=2101563&c hecksum=AD0BD1EBA2A639122F42989D11C03B83

## Description

### FIELD OF THE INVENTION

The present disclosure relates to the field of luminescent materials, and more particularly relates to a titanate luminescent material and a preparation method thereof.

### BACKGROUND OF THE INVENTION

As compared with red sulfide low voltage electroluminescent phosphor Zn₁₋ₓCdₓS (x=0∼1.0), titanate substrate has a good chemical stability, and the phosphor obtained by doping rare earth luminescent center ions, such as CaTiO₃, has a better color purity. The coordinates of red color of Pr³⁺ excited by photoluminescence and cathode ray are: x=0.680, y=0.311, which are very close to that of the ideal red according to NTSC color gamut. Considering the material stability and luminous colors, the titanate substrate phosphor activated by rare earth ion is expected to replace red sulfide phosphor Zn₁₋ₓCdₓS and become a new generation of non-toxic, highly stable red FED phosphor material. Accordingly, it is the goal of researchers for further improving the luminescent properties of this material.

### SUMMARY OF THE INVENTION

Accordingly, it is necessary to provide a titanate luminescent material with high stability and excellent luminescent properties and a preparation method thereof.

A titanate luminescent material has a formula of A₁₋ₓTiO₃:Prₓ@TiO₂@M_{y};
wherein A is at least one selected from the group consisting of Ca, Sr, and Ba;
M is at least one nanoparticles selected from the group consisting of Ag, Au, Pt, Pd, and Cu;
0 <x<0.01;
y is the molar ratio between M and Ti in A₁₋ₓTiO₃:Prₓ@TiO₂, and 0<y≤1 × 10⁻²;
@ represents coating; M is a core, TiO₂ is an intermediate layer shell, and A₁₋ₓTiO₃:Prₓ is an outer layer shell.

In one embodiment, 0.001 ≤x≤0.005.

In one embodiment, 1×10⁻⁵≤y≤5×10⁻³.

A method of preparing a titanate luminescent material includes the following steps:
step one, mixing a metal salt solution and triethanolamine titanium isopropoxide, adding a reducing agent, heating at a temperature of 120°C to 160°C with stirring, and obtaining TiO₂@M_{y} colloid, rinsing and drying the colloid to prepare TiO₂@M_{y} solid having a core-shell structure, wherein M is at least one nanoparticles selected from the group consisting of Ag, Au, Pt, Pd, and Cu; y is the molar ratio between M and Ti, and 0<y≤1 × 10⁻²;
step two, mixing a source compound of A, a source compound of Pr, and the TiO₂@M_{y} solid to form a mixture, calcining the mixture at temperature of 800°C to 1200°C and for 2 hours to 12 hours, and then heating the mixture at temperature of 1000°C to 1400°C for 0.5 hours to 6 hours in a reducing atmosphere, cooling and grinding the mixture to prepare A₁₋ₓTiO₃:Prₓ@TiO₂@M_{y} powder, wherein A is at least one selected from the group consisting of Ca, Sr, and Ba; 0 <x≤0.01; @ represents coating; M is a core, TiO₂ is an intermediate layer shell, and A₁₋ₓTiO₃:Prₓ is an outer layer shell.

In one embodiment, the source compound of A in step two is at least one selected from the group consisting of oxide, carbonate, nitrate, and hydroxide of A.

In one embodiment, the source compound of Pr in step two is at least one selected from the group consisting of oxide, carbonate, nitrate, and hydroxide of Pr.

In one embodiment, in step one, the reducing agent is dimethyl formamide; and a volume of the reducing agent is 20% to 80% of the sum volume of metal salt solution, triethanolamine titanium isopropoxide, and the reducing agent.

In one embodiment, the volume of the reducing agent is 25% to 50% of the sum volume of metal salt solution, triethanolamine titanium isopropoxide, and the reducing agent.

In one embodiment, in step one, the TiO₂@My colloid is centrifugally precipitated and then rinsed with ethanol.

In one embodiment, the reducing atmosphere in step two comprises at least one reducing gas selected from the group consisting of mixed atmosphere of nitrogen and hydrogen, carbon, carbon monoxide, and pure hydrogen.

In the forgoing titanate luminescent material A₁₋ₓTiO₃:Prₓ@TiO₂@My, the metal nanoparticles are coated by TiO₂, and TiO₂ is coated by A₁₋ₓTiO₃:Prₓ, in other words, metal nanoparticles as a core, TiO₂ as an intermediate layer shell, and A₁₋ₓTiO₃:Prₓ as an outer layer shell, such that a titanate luminescent material with a core-shell structure is provided, thus increasing an internal quantum efficiency thereof. Additionally, since metal nanoparticles are added into the titanate luminescent material, the luminous intensity is thus increased, so that the titanate luminescent material has a high stability and a better luminescent performance. The described titanate luminescent materials can be widely applied to lighting, display and the like areas. The preparation method has many advantages, such as simple procedure, low the equipment requirement, low cost, no pollution, and easy control of the reaction, such that it is suitable for industrial production.

### BRIEF DESCRIPTION OF THE DRAWINGS

FIG. 1 is a flow chart of a method of preparing a titanate luminescent material in accordance with one embodiment;
FIG. 2 is a graphical representation of cathodoluminescence spectrum under a voltage of 1.5kV of the luminescent material formed in accordance with Example 2, and the luminescent material of Ca_{0.998}TiO₃: Pr_{0.002}@TiO₂ without coating metal nanoparticles.

### DETAILED DESCRIPTION OF THE EMBODIMENTS

Reference will now be made to the drawings to describe, in detail, embodiments of the present titanate luminescent material and preparation method thereof.

An embodiment of a titanate luminescent material has a formula of A₁₋ₓTiO₃:Prₓ@TiO₂@M_{y}.
wherein A is at least one selected from the group consisting of Ca, Sr, and Ba.

M is at least one nanoparticles selected from the group consisting of Ag, Au, Pt, Pd, and Cu.

0 <x≤0.01; preferably 0.001 ≤x≤0.005.

y is the molar ratio between M and Ti in A₁₋ₓTiO₃:Prₓ@TiO₂, and 0<y≤1×10⁻²; preferably 1×10⁻⁵≤y≤5×10⁻³.

@ represents coating; M is a core, TiO₂ is an intermediate layer shell, and A₁₋ₓTiO₃:Prₓ is an outer layer shell. In the present embodiment, the TiO₂ has a spherical shape.

In the forgoing titanate luminescent material, the metal nanoparticles are coated by TriO₂, and TiO₂ is coated by A₁₋ₓTiO₃:Prₓ, in other words, the titanate luminescent material uses M as a core, TiO₂ as an intermediate layer shell, and A₁₋ₓTiO₃:Prₓ as an outer layer shell, such that a titanate luminescent material with a core-shell structure is provided, thus increasing an internal quantum efficiency thereof. Additionally, since metal nanoparticles are added into the titanate luminescent material, the luminous intensity is thus increased, so that the titanate luminescent material has a high stability and a better luminescent performance. The described titanate luminescent materials can be widely applied to lighting, display and the like areas.

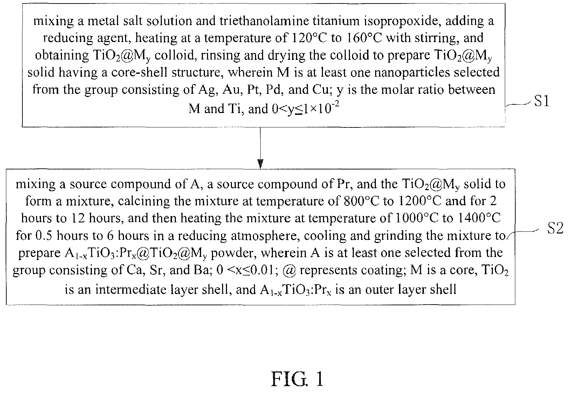

Referring to FIG. 1, a method of preparing the titanate luminescent material includes the following steps:
Step S1, a metal salt solution and triethanolamine titanium isopropoxide are mixed, a reducing agent is then added to the mixture. The mixture is heated at a temperature of 120°C to 160°C (preferably 140°C) with stirring to form TiO₂@M_{y} colloid. The colloid is rinsed and dried to prepare TiO₂@M_{y} solid having a core-shell structure, where M is at least one nanoparticles selected from the group consisting of Ag, Au, Pt, Pd, and Cu; y is the molar ratio between M and Ti, and 0<y≤1×10⁻².

The metal salt solution can be at least one soluble salt solution of metal selected from the group consisting of Ag, Au, Pt, Pd, and Cu.

In the present embodiment, the reducing agent is dimethyl formamide, and a volume of the reducing agent is 20% to 80% of the sum volume of metal salt solution, triethanolamine titanium isopropoxide, and the reducing agent. Additionally, the volume of the reducing agent is 25% to 50% of the sum volume of metal salt solution, triethanolamine titanium isopropoxide, and the reducing agent.

In the present embodiment, the TiO₂@M_{y} colloid is firstly centrifugally precipitated and then rinsed with ethanol.

Step S2, a source compound of A, a source compound of Pr, and the TiO₂@M_{y} solid are mixed to form a mixture, the mixture is calcinated at temperature of 800°C to 1200°C and for 2 hours to 12 hours, and then the mixture is heated at temperature of 1000°C to 1400°C for 0.5 hours to 6 hours in a reducing atmosphere, the mixture is cooled and ground to prepare A₁₋ₓTiO₃:Prₓ@TiO₂@M_{y} powder, wherein A is at least one selected from the group consisting of Ca, Sr, and Ba; 0 <x≤0.01; @ represents coating; M is a core, TiO₂ is an intermediate layer shell, and A₁₋ₓTiO₃:Prₓ is an outer layer shell.

The source compound of A is at least one selected from the group consisting of oxide, carbonate, nitrate, and hydroxide of A.

The source compound of Pr in step two is at least one selected from the group consisting of oxide, carbonate, nitrate, and hydroxide of Pr.

The reducing atmosphere includes at least one reducing gas selected from the group consisting of mixed atmosphere of nitrogen and hydrogen, carbon, carbon monoxide, and pure hydrogen.

In the present embodiment, the reducing atmosphere is at least one reducing gas of mixed atmosphere of nitrogen (N₂) and hydrogen (H₂), carbon (C), carbon monoxide (CO), and pure hydrogen (H₂).

The preparation method has many advantages, such as simple procedure, low the equipment requirement, low cost, no pollution, and easy control of the reaction, such that it is suitable for industrial production.

The specific examples are described below.

### Example 1

Preparation of titanate luminescent material of Sr_{0.999}TiO₃:Pr_{0.001}@TiO₂@Au_{1×10⁻²} using a high-temperature solid-phase synthesis method is described below.

Preparation of TiO₂@Au_{1×10⁻²}: 10.3mg of chloroauric acid (AuCl₃·HCl· 4H₂O) was weighed and dissolved into deionized water to prepare 20mL of chloroauric acid solution with a concentration of 5×10⁻³mol/L. 5mL of triethanolamine titanium isopropoxide with a concentration of 4.3mol/L was measured and diluted with isopropanol to a concentration of 1mol/L. 10mL of 5×10⁻³mol/L chloroauric acid solution and 5mL of 1mol/L isopropanol solution containing triethanolamine titanium isopropoxide were mixed and stirred, 15mL of dimethyl formamide was added. After stirring for 15min at a room temperature, the mixture was heated to 160°C and stirred using a reflux device, when the color of solution turned light brown through colorless and turned dark brown, the heating was stopped, the system was cooled to the room temperature, and TiO₂@Au_{1×10⁻²} colloid was obtained. The colloid was then centrifuged, rinsed with ethanol and dried, and TiO₂@A_{1×10⁻²} solid was prepared, where y=1×10⁻².

Preparation of titanate luminescent material Sr_{0.999}TiO₃:Pr_{0.001}@TiO₂@ Au_{1×10⁻²}: 0.5175g of SrO, 0.0009g of Pr₆O₁₁, and 0.4195g of TiO₂@Au_{1×10⁻²} powder were weighed and ground sufficiently in an agate mortar to mix evenly, the mixture powder was then transferred to a corundum crucible, heated at 800°C in a muffle furnace for 12h, then sintered and reduced at 1300 °C for 4h in a tube furnace under a H₂ reducing atmosphere. After cooling the powder to the room temperature, titanate luminescent material Sr_{0.999}TiO₃:Pr_{0.001}@TiO₂@ Au_{1×10⁻²} was obtained.

### Example 2

Preparation of titanate luminescent material of Ca_{0.998}TiO₃:Pr_{0.002}@TiO₂@Ag_{5×10}-₄ using a high-temperature solid-phase synthesis method is described below.

Preparation of TiO₂@Ag_{5×10}-₄: 3.4mg of silver nitrate (AgNO₃) was weighed and dissolved into deionized water to prepare 20mL of silver nitrate solution with a concentration of 1×10⁻³mol/L. 10mL of triethanolamine titanium isopropoxide with a concentration of 4.3mol/L was measured and diluted with isopropanol to a concentration of 0.22mol/L. 2mL of 1×10⁻³mol/L silver nitrate solution and 18mL of 0.22mol/L isopropanol solution containing triethanolamine titanium isopropoxide were mixed and stirred, 10mL of dimethyl formamide was added. After stirring for 15min at a room temperature, the mixture was heated to 140°C and stirred using a reflux device, when the color of solution turned light brown through colorless and turned dark brown, the heating was stopped, the system was cooled to the room temperature, and TiO₂@Ag_{5×10⁻⁴} colloid was obtained. The colloid was then centrifuged, rinsed with ethanol and dried, and TiO₂@Ag_{5×10⁻⁴} solid was prepared, where y=5x10⁴.

Preparation of titanate luminescent material Ca_{0.998}TiO₃:Pr_{0.002}@TiO₂@Ag_{5×10⁻⁴}: 0.3996g of CaCO₃, 0.0014g of Pr₆O₁₁, and 0.3196g of TiO₂@Ag_{5×10⁻⁴} powder were weighed and ground sufficiently in an agate mortar to mix evenly, the mixture powder was then transferred to a corundum crucible, heated at 1000°C in a muffle furnace for 6h, then sintered and reduced at 1200 °C for 4h in a tube furnace under a 95% N₂+5% H₂ weak reducing atmosphere. After cooling the powder to the room temperature, titanate luminescent material Ca_{0.998}TiO₃:Pr0.002@TiO₂@Ag_{5×10⁻⁴} was obtained.

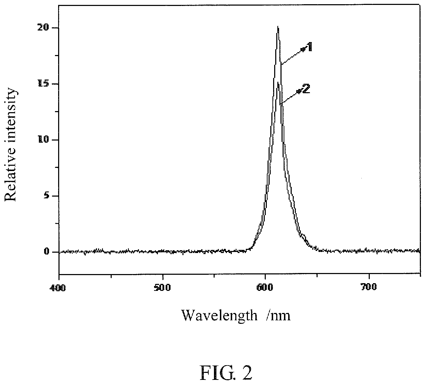

FIG. 2 is a graphical representation of cathodoluminescence spectrum under a voltage of 1.5kV of the luminescent material formed in accordance with Example 2, and the luminescent material of Ca_{0.998}TiO₃: Pr_{0.002}@TiO₂ without coating metal nanoparticles. It can be seen from FIG. 2 that, at an emission peak of 612nm, the emission intensity of luminescent material coating metal nanoparticles is enhanced by 30% comparing to Ca_{0.998}TiO₃: Pr_{0.002@}TiO₂ without coating metal nanoparticles Ag. Accordingly, the luminescent material according to Example 2 has a good stability, good color purity and high luminous efficiency.

### Example 3

Preparation of titanate luminescent material of Ba_{0.995}TiO₃: Pr_{0.005}@TiO₂@Pts_{5×10⁻³} using a high-temperature solid-phase synthesis method is described below.

Preparation of TiO₂@Pt_{5×10⁻³}: 25.9mg of chloroplatinic acid (H₂PtCl₆·6H₂O) was weighed and dissolved into deionized water to prepare 10mL of chloroplatinic acid solution with a concentration of 2.5×10⁻³mol/L. 5mL of triethanolamine titanium isopropoxide with a concentration of 4.3mol/L was measured and diluted with isopropanol to a concentration of 0.5mol/L. 8mL of 2.5×10⁻³mol/L chloroplatinic acid solution and 16mL of 0.5mol/L isopropanol solution containing triethanolamine titanium isopropoxide were mixed and stirred, 6mL of dimethyl formamide was added. After stirring for 15min at a room temperature, the mixture was heated to 140°C and stirred using a reflux device, when the color of solution turned light brown through colorless and turned dark brown, the heating was stopped, the system was cooled to the room temperature, and TiO₂@Pt_{5×10⁻³} colloid was obtained. The colloid was then centrifuged, rinsed with ethanol and dried, and TiO₂@Pt_{5×10⁻³} solid was prepared, where y=5x10⁻³.

Preparation of titanate luminescent material Ba_{0.995}TiO₃: Pr_{0.005}@TiO₂@Pts_{5×10⁻³}: 0.6819g of Ba(OH)₂, 0.0034g of Pr₆O₁₁, and 0.3196g of TiO₂@Pt_{5×10⁻³} powder were weighed and ground sufficiently in an agate mortar to mix evenly, the mixture powder was then transferred to a corundum crucible, heated at 1200°C in a muffle furnace for 2h, then sintered and reduced at 1400 °C for 0.5h in a tube furnace under a carbon reducing atmosphere. After cooling the powder to the room temperature, titanate luminescent material Ba_{0.995}TiO₃: Pr_{0.005}@TiO₂@Pt_{5×10⁻³} was obtained.

### Example 4

Preparation of titanate luminescent material of Ca_{0.99}TiO₃:Pr_{0.01}@TiO₂@Pd_{1×10⁻⁵} using a high-temperature solid-phase synthesis method is described below.

Preparation of TiO₂@Pd_{1×10⁻⁵:} 0.22mg of palladium chloride (PdCl_{2·}2H₂O) was weighed and dissolved into deionized water to prepare 20mL of silver nitrate solution with a concentration of 5×10⁻⁵mol/L. 10mL of triethanolamine titanium isopropoxide with a concentration of 4.3mol/L was measured and diluted with isopropanol to a concentration of 2.5mol/L. 5mL of 5×10⁻⁵mol/L palladium chloride solution and 10mL of 2.5mol/L isopropanol solution containing triethanolamine titanium isopropoxide were mixed and stirred, 5mL of dimethyl formamide was added. After stirring for 15min at a room temperature, the mixture was heated to 130°C and stirred using a reflux device, when the color of solution turned light brown through colorless and turned dark brown, the heating was stopped, the system was cooled to the room temperature, and TiO₂@Pd_{1×10⁻⁵} colloid was obtained. The colloid was then centrifuged, rinsed with ethanol and dried, and TiO₂@Pd_{1×10⁻⁵} was prepared, where y=1×10⁻⁵.

Preparation of titanate luminescent material Ca₀.₉₉TiO₃:Pr_{0.01}@TiO₂@Pd_{1×10⁻⁵} 0.6494g of Ca(NO₃)2, 0.0137g of Pr(NO₃)₃, and 0.3260g of TiO₂@Pd_{1×10⁻⁵} powder were weighed and ground sufficiently in an agate mortar to mix evenly, the mixture powder was then transferred to a corundum crucible, heated at 1100°C in a muffle furnace for 4h, then sintered and reduced at 1200 °C for 6h in a tube furnace under a 95% N₂+5% H₂ weak reducing atmosphere. After cooling the powder to the room temperature, titanate luminescent material Ca_{0.99}TiO₃:Pr_{0.01}@TiO₂@Pd_{1×10⁻⁵} was obtained.

### Example 5

Preparation of titanate luminescent material of (Ca_{0.6}Sr_{0.4})_{0.996}TiO₃:Pr_{0.004}@TiO₂@Cu_{1×10⁻⁴} using a high-temperature solid-phase synthesis method is described below.

Preparation of TiO₂@Cu_{1×10⁻⁴}: 1.6mg of copper nitrate was weighed and dissolved into ethanol to prepare 20mL of copper nitrate solution with a concentration of 4×10⁻⁴Mol/L. 5mL of triethanolamine titanium isopropoxide with a concentration of 4.3mol/L was measured and diluted with isopropanol to a concentration of 2mol/L. 2mL of 4×10⁻⁴mol/L copper nitrate solution solution and 4mL of 2mol/L isopropanol solution containing triethanolamine titanium isopropoxide were mixed and stirred, 24mL of dimethyl formamide was added. After stirring for 15min at a room temperature, the mixture was heated to 120°C and stirred using a reflux device, when the color of solution turned light brown through colorless and turned dark brown, the heating was stopped, the system was cooled to the room temperature, and TiO₂@Cu_{1×10⁻⁴} colloid was obtained. The colloid was then centrifuged, rinsed with ethanol and dried, and TiO₂@Cu_{1×10⁻⁴} solid was prepared, where y=1×10⁻⁴.

Preparation of titanate luminescent material (Ca_{0.6}Sr_{0.4})_{0.996}TiO₃:Pr_{0.004}@TiO₂@Cu_{1×10⁻⁴}: 0.1817g of Ca(OH)₂, 0.0485g of Sr(OH)₂, 0.0027g of Pr₆O₁₁, and 0.196g of TiO₂@Cu_{1×10⁻⁴} powder were weighed and ground sufficiently in an agate mortar to mix evenly, the mixture powder was then transferred to a corundum crucible, heated at 900°C in a muffle furnace for 3h, then sintered and reduced at 1000 °C for 6h in a tube furnace under a CO reducing atmosphere. After cooling the powder to the room temperature, titanate luminescent material (Ca_{0.6}Sr_{0.4})_{0.996}TiO₃:Pr_{0.004}@TiO₂@Cul_{1×10⁻⁴} was obtained.

### Example 6

Preparation of titanate luminescent material of Ba_{0.994}TiO₃: Pr_{0.006}@TiO₂@(Ag_{0.5}/Au_{0.5})_{1.25×10⁻³} using a high-temperature solid-phase synthesis method is described below.

Preparation of TiO₂@(Ag_{0.5}/Au_{0.5})_{1.25×10⁻³}: 6.2mg of chloroauric acid (AuCl₃ ·HCl·4H₂O) and 2.5mg AgNO₃ were dissolved in 28mL deionized water to prepare 30mL of mixed solution of chloroauric acid and silver nitrate with a sum metal concentration of 1×10⁻³mol/L (each of chloroauric acid and silver nitrate had a concentration of 0.5×10⁻³mol/L). 2mL of triethanolamine titanium isopropoxide with a concentration of 4.3mol/L was measured and diluted with isopropanol to a concentration of 0.4mol/L. 5mL of 1×10⁻³mol/L mixed solution of chloroauric acid and silver nitrate and 10mL of 0.4mol/L isopropanol solution containing triethanolamine titanium isopropoxide were mixed and stirred, 10mL of dimethyl formamide was added. After stirring for 15min at a room temperature, the mixture was heated to 150°C and stirred using a reflux device, when the color of solution turned light brown through colorless and turned dark brown, the heating was stopped, the system was cooled to the room temperature, and TiO₂@(Ag_{0.5}/Au_{0.5})_{1.25×10⁻³} colloid was obtained. The colloid was then centrifuged, rinsed with ethanol and dried, and TiO₂@(Ag_{0.5}/Au_{0.5})_{1.25×10⁻³} solid was prepared, where y=1.25 ×10⁻³.

Preparation of titanate luminescent material Ba_{0.994}TiO₃: Pr_{0.006}@TiO₂@(Ag_{0.5}/Au_{0.5})]_{1.25×10⁻³}: 0.7845g of BaCO₃, 0.0010g of Pr₆O₁₁, and 0.3196g of TiO₂@Cu_{1×10⁻⁴} powder were weighed and ground sufficiently in an agate mortar to mix evenly, the mixture powder was then transferred to a corundum crucible, heated at 900°C in a muffle furnace for 5h, then sintered and reduced at 1300 °C for 4h in a tube furnace under a 95% N₂+5% H₂ weak reducing atmosphere. After cooling the powder to the room temperature, titanate luminescent material Ba_{0.994}TiO₃: Pr_{0.006}@TiO₂@(Ag_{0.5}/Au_{0.5})_{1.25×10⁻³} was obtained.

Although the present invention has been described with reference to the embodiments thereof and the best modes for carrying out the present invention, it is apparent to those skilled in the art that a variety of modifications and changes may be made without departing from the scope of the present invention, which is intended to be defined by the appended claims.

## Claims

1. A titanate luminescent material, having a formula of A₁₋ₓTiO₃:Prₓ@TiO₂@M_{y};
wherein A is at least one selected from the group consisting of Ca, Sr, and Ba;
M is at least one nanoparticles selected from the group consisting of Ag, Au, Pt, Pd, and Cu;
0 <x≤0.01;
y is the molar ratio between M and Ti in A₁₋ₓTiO₃:Prₓ@TiO₂, and 0<y≤1×10⁻²;
@ represents coating; M is a core, TiO₂ is an intermediate layer shell, and A₁₋ₓTiO₃:Prₓ is an outer layer shell.

2. The titanate luminescent material according to claim 1, wherein 0.001 ≤x≤0.005.

3. The titanate luminescent material according to claim 1, wherein 1×10⁻⁵≤y≤5×10⁻³.

4. A method of preparing a titanate luminescent material, comprising the following steps:
step one, mixing a metal salt solution and triethanolamine titanium isopropoxide, adding a reducing agent, heating at a temperature of 120°C to 160°C with stirring, and obtaining TiO₂@M_{y} colloid, rinsing and drying the colloid to prepare TiO₂@M_{y} solid having a core-shell structure, wherein M is at least one nanoparticles selected from the group consisting of Ag, Au, Pt, Pd, and Cu; y is the molar ratio between M and Ti, and 0<y≤1×10⁻²;
step two, mixing a source compound of A, a source compound of Pr, and the TiO₂@M_{y} solid to form a mixture, calcining the mixture at temperature of 800°C to 1200°C and for 2 hours to 12 hours, and then heating the mixture at temperature of 1000°C to 1400°C for 0.5 hours to 6 hours in a reducing atmosphere, cooling and grinding the mixture to prepare A₁₋ₓTiO₃:Prₓ@TiO₂@M_{y} powder, wherein A is at least one selected from the group consisting of Ca, Sr, and Ba; 0 <x≤0.01; @ represents coating; M is a core, TiO₂ is an intermediate layer shell, and A₁₋ₓTiO₃:Prₓ is an outer layer shell.

5. The method according to claim 4, wherein the source compound of A in step two is at least one selected from the group consisting of oxide, carbonate, nitrate, and hydroxide of A.

6. The method according to claim 4, wherein the source compound of Pr in step two is at least one selected from the group consisting of oxide, carbonate, nitrate, and hydroxide of Pr.

7. The method according to claim 4, wherein in step one, the reducing agent is dimethyl formamide; and a volume of the reducing agent is 20% to 80% of the sum volume of metal salt solution, triethanolamine titanium isopropoxide, and the reducing agent.

8. The method according to claim 7, wherein the volume of the reducing agent is 25% to 50% of the sum volume of metal salt solution, triethanolamine titanium isopropoxide, and the reducing agent.

9. The method according to claim 4, wherein in step one, the TiO₂@M_{y} colloid is centrifugally precipitated and then rinsed with ethanol.

10. The method according to claim 4, wherein the reducing atmosphere in step two comprises at least one reducing gas selected from the group consisting of mixed atmosphere of nitrogen and hydrogen, carbon, carbon monoxide, and pure hydrogen.

## Patentansprüche

1. Lumineszentes Titanatmaterial mit einer Formel A₁₋ₓTiO₃:Prₓ@TiO₂@M_{y};
wobei A zumindest eines ist, das aus der Gruppe ausgewählt ist, die aus Ca, Sr und Ba besteht;
M zumindest ein Nanopartikel ist, das aus der Gruppe ausgewählt ist, die aus Ag, Au, Pt, Pd und Cu besteht;
0 < x ≤ 0,01;
y das Molverhältnis zwischen M und Ti in A₁₋ₓTiO₃:Prₓ@TiO₂ und
0 < y ≤ 1 × 10⁻² ist;
@ eine Beschichtung darstellt; M ein Kern ist, TiO₂ eine Zwischenschicht-schale ist, und A₁₋ₓTiO₃:Prₓ eine Außenschichtschale ist.

2. Lumineszentes Titanatmaterial nach Anspruch 1,
wobei 0,001 ≤ x ≤ 0,005.

3. Lumineszentes Titanatmaterial nach Anspruch 1,
wobei 1× 10⁻⁵≤ y ≤ 5 × 10⁻³.

4. Verfahren zum Herstellen eines lumineszenten Titanatmaterials mit den folgenden Schritten:
Schritt Eins, Mischen einer Metallsalzlösung und Triethanolamintitanisopropoxid, Zugeben eines Reduktionsmittels, Erwärmen auf eine Temperatur von 120°C bis 160°C unter Rühren, und Erhalten eines TiO₂@M_{y}-Kolloids, Waschen und Trocknen des Kolloids, um TiO₂@M_{y}-Feststoff mit einer Kern-Schalen-Struktur herzustellen, wobei M zumindest ein Nanopartikel ist, das aus der Gruppe ausgewählt ist, die aus Ag, Au, Pt, Pd und Cu besteht; y das Molverhältnis zwischen M und Ti ist, und 0 < y ≤ 1 × 10⁻² ist;
Schritt Zwei, Mischen einer Quellverbindung von A, einer Quellverbindung von Pr und des TiO₂@M_{y}-Feststoffes, um ein Gemisch zu bilden, Kalzinieren des Gemisches bei einer Temperatur von 800°C bis 1200°C und für 2 Stunden bis 12 Stunden, und dann Erwärmen des Gemisches auf eine Temperatur von 1000°C bis 1400°C für 0,5 Stunden bis 6 Stunden in einer reduzierenden Atmosphäre, Abkühlen und Pulverisieren des Gemisches, um ein A₁₋ₓTiO₃:Prₓ@TiO₂@M_{y}-Pulver herzustellen, wobei A zumindest eines ist, das aus der Gruppe ausgewählt ist, die aus Ca, Sr und Ba besteht; 0 < x ≤ 0,01; @ eine Beschichtung darstellt; M ein Kern ist, TiO₂ eine Zwischenschichtschale ist und A₁₋ₓTiO₃:Prₓ eine Außenschichtschale ist.

5. Verfahren nach Anspruch 4,
wobei die Quellverbindung von A in Schritt Zwei zumindest eine ist, die aus der Gruppe ausgewählt ist, die aus Oxid, Karbonat, Nitrat und Hydroxid von A besteht.

6. Verfahren nach Anspruch 4,
wobei die Quellverbindung von Pr in Schritt Zwei zumindest eine ist, die aus der Gruppe ausgewählt ist, die aus Oxid, Karbonat, Nitrat und Hydroxid von Pr besteht.

7. Verfahren nach Anspruch 4,
wobei in Schritt Eins das Reduktionsmittel Dimethylformamid ist; und ein Volumen des Reduktionsmittels 20 % bis 80 % des Summenvolumens von Metallsalzlösung, Triethanolamintitanisopropoxid und des Reduktionsmittel ist.

8. Verfahren nach Anspruch 7,
wobei das Volumen des Reduktionsmittels 25 % bis 50 % des Summenvolumens von Metallsalzlösung, Triethanolamintitanisopropoxid und Reduktionsmittel ist.

9. Verfahren nach Anspruch 4,
wobei in Schritt Eins das TiO₂@M_{y}-Kolloid zentrifugal ausgefällt und dann mit Ethanol gewaschen wird.

10. Verfahren nach Anspruch 4,
wobei die reduzierende Atmosphäre in Schritt Zwei zumindest ein Reduktionsgas umfasst, das aus der Gruppe ausgewählt ist, die aus einer Mischatmosphäre aus Stickstoff und Wasserstoff, Kohlenstoff, Kohlenmonoxid und reinem Wasserstoff besteht.

## Revendications

1. Matériau luminescent du type titanate, de formule A₁₋ₓTiO₃ : Prₓ@TiO₂@M_{y} ;
A représentant au moins l'un choisi dans le groupe consistant en Ca, Sr et Ba ;
M représentant au moins une nanoparticule choisie dans le groupe consistant en Ag, Au, Pt, Pd et Cu ;
0 < x ≤ 0,01 ;
y représentant le rapport molaire entre M et Ti dans A₁₋ₓTiO₃ : Prₓ@TiO₂, et 0 < y ≤ 1 x 10⁻² ;
@ représentant un revêtement ; M représentant un noyau, TiO₂ représentant une enveloppe de couche intermédiaire et A₁₋ₓTiO₃:Prₓ représentant une enveloppe de couche extérieure.

2. Matériau luminescent du type titanate suivant la revendication 1, dans lequel 0,001 ≤ x ≤ 0,005.

3. Matériau luminescent du type titanate suivant la revendication 1, dans laquelle 1 x 10⁻⁵ ≤ y ≤ 5 x 10⁻³.

4. Procédé de préparation d'un matériau luminescent du type titanate, comprenant les étapes suivantes :
étape une, mélange d'une solution d'un sel métallique et d'isopropylate de titane-triéthanolamine, addition d'un agent réducteur, chauffage à une température de 120°C à 160°C sous agitation, et obtention d'un colloïde de TiO₂@M_{y}, rinçage et séchage du colloïde pour préparer une matière solide TiO₂@M_{y} ayant une structure noyau-enveloppe, M représentant au moins une nanoparticule choisi dans le groupe consistant en Ag, Au, Pt, Pd et Cu ; y représente le rapport molaire entre M et Ti, et 0 < y ≤ 1 x 10⁻² ;
étape deux, mélange d'un composé source de A, d'un composé source de Pr et de la matière solide TiO₂@M_{y} pour former un mélange, calcination du mélange à une température de 800°C à 1200°C pendant 2 heures à 12 heures, puis chauffage du mélange à une température de 1000°C à 1400°C pendant 0,5 heure à 6 heures dans une atmosphère réductrice, refroidissement et broyage du mélange pour préparer une poudre de A₁₋ₓTiO₃:Prₓ@TiO₂@M_{y}, A représentant au moins l'un choisi dans le groupe consistant en Ca, Sr et Ba ; 0 < x ≤ 0,01 ; @ représentant un revêtement ; M représentant un noyau ; TiO₂ représentant une enveloppe de couche intermédiaire, et A₁₋ₓTiO₃:Prₓ représentant une enveloppe de couche extérieure.

5. Procédé suivant la revendication 4, dans lequel le composé source de A dans l'étape deux est au moins un composé choisi dans le groupe consistant en un oxyde, un carbonate, un nitrate et un hydroxyde de A.

6. Procédé suivant la revendication 4, dans lequel le composé source de Pr dans l'étape deux est au moins un composé choisi dans le groupe consistant en un oxyde, un carbonate, un nitrate et un hydroxyde de Pr.

7. Procédé suivant la revendication 4, dans lequel, dans l'étape 1, l'agent réducteur est le diméthylformamide ; et un volume de l'agent réducteur représente 20 % à 80 % du volume total de la solution de sel métallique, de l'isopropylate de titane-triéthanolamine et de l'agent réducteur.

8. Procédé suivant la revendication 7, dans lequel le volume de l'agent réducteur représente 25 % à 50 % du volume total de la solution de sel métallique, de l'isopropylate de titane-triéthanolamine et de l'agent réducteur.

9. Procédé suivant la revendication 4, dans lequel, dans l'étape 1, le colloïde de TiO₂@M_{y} est soumis à une précipitation centrifuge et ensuite à un rinçage avec de l'éthanol.

10. Procédé suivant la revendication 4, dans lequel l'atmosphère réductrice dans l'étape 2 comprend au moins un gaz réducteur choisi dans le groupe consistant en une atmosphère mixte d'azote et d'hydrogène, le carbone, le dioxyde de carbone et l'hydrogène pur.
